Europäisches Patentamt

European Patent Office

Office européen des brevets

(19)

(11) Veröffentlichungsnummer: **0 241 713 B1**

(12) **EUROPÄISCHE PATENTSCHRIFT**

(45) Veröffentlichungstag der Patentschrift: **03.06.92**

(21) Anmeldenummer: **87103607.5**

(22) Anmeldetag: **12.03.87**

(51) Int. Cl.5: **A23G 9/00**, A23G 9/02, A23G 9/20, A23G 9/28

(54) **Formkörper eines Konfektproduktes und Vorrichtung zu seiner Herstellung.**

(30) Priorität: **14.03.86 DE 3608623**

(43) Veröffentlichungstag der Anmeldung:
**21.10.87 Patentblatt 87/43**

(45) Bekanntmachung des Hinweises auf die Patenterteilung:
**03.06.92 Patentblatt 92/23**

(84) Benannte Vertragsstaaten:
**AT BE CH DE ES FR GB GR IT LI LU NL SE**

(56) Entgegenhaltungen:
EP-A- 0 158 610      DE-A- 3 436 578
FR-A- 1 069 671      GB-A- 2 131 668
GB-A- 2 137 470      GB-A- 2 143 718
GB-A- 2 165 435

(73) Patentinhaber: **Schöller Lebensmittel GmbH & Co. KG**
**Bucher Strasse 137**
**W-8500 Nürnberg 90(DE)**

(72) Erfinder: **Beer, Richard**
**Castellstrasse 86b**
**W-8500 Nürnberg 60(DE)**

(74) Vertreter: **Körber, Wolfhart, Dr.rer.nat. et al**
**Patentanwälte Dipl.-Ing. H. Mitscherlich**
**Dipl.-Ing. K. Gunschmann Dr.rer.nat. W. Körber Dipl.Ing. J. Schmidt-Evers Dipl.-Ing. W. Melzer Steinsdorfstrasse 10**
**W-8000 München 22(DE)**

EP 0 241 713 B1

# Beschreibung

Die Erfindung betrifft einen Formkörper eines Konfektproduktes, bestehend aus mehreren übereinander liegenden, aus extrudierten Strängen gebildeten Konfektschichten, insbesondere aus Speiseeis, von denen mindestens eine wellenförmig und gegebenenfalls sich selbst überlappend verläuft nach dem Oberbegriff des Patentanspruches 1 oder 2, sowie Vorrichtungen zur Herstellung des Formkörpers.

Speiseeisprodukte dieser Form und dieses Aufbaues sind in letzter Zeit bekannt geworden und erfreuen sich steigender Beliebtheit. Das Ansprechende an diesen Produkten ist der wechselweise Aufbau aus Speiseeisschichten und gegebenenfalls dünnen Trennschichten, welche aus den verschiedensten Massen, wie beispielsweise Schokolade, Fruchtcocktails oder auch Waffelplättchen, bestehen können. Die Speiseeislagen können zudem durch die erwähnte Faltung oder durch Einschlagen von Luft locker und cremig gemacht werden, so daß insgesamt ein abwechslungsreiches, erfrischendes und auf der Zunge doch nicht zu kaltes Produkt entsteht.

Solche Speiseeisprodukte (gefrorene Konfekt-Produkte) sind beispielsweise in den GB-PS'en 1 219 593 und 1 439 143 beschrieben. Sie weisen eine Mehrzahl von übereinander angeordneten extrudierten Schichten eines belüfteten gefrorenen Konfektmaterials auf; zwischen benachbarten Schichten des gefrorenen Konfektmaterials ist jeweils eine Schicht eines zweiten Konfektmaterials oder Waffelplättchen angeordnet. Abweichend vom Gegenstand der britischen Patentschriften kann auch anstelle von belüftetem gefrorenem Konfektmaterial gasfreies Material entsprechender Zusammensetzung eingesetzt werden.

Offenbar um das Kältegefühl beim Genuß eines derartigen Produktes zu mindern und auch um ein Produkt mit einer neuartigen Textur und Struktur zu schaffen, wird in der GB-PS 2 108 363 ein gefrorenes Konfekt-Produkt der eingangs genannten Art vorgeschlagen, welches wenigstens vier extrudierte Schichten mit einer Schichtdicke von weniger als jeweils 5 mm aufweist, wobei die Zwischenschichten gegenüber den erwähnten extrudierten Schichten relativ dünn sind. Durch die Reduzierung der Schichtdicke der extrudierten Schichten, also der eigentlichen Speiseeisschichten, wird ein blättriger Gesamteindruck des Produktes hervorgerufen. Wenn, wie in der genannten GB-PS beschrieben, die extrudierten Speiseeisschichten oder zumindest eine Speiseeisschicht als flaches Band wellenförmig sich gegebenenfalls überlappend eingebracht werden, sind zwar zusätzlich Hohlräume geschaffen, die aber wegen ihrer Lage an der oberen und unteren Randfläche der Konfektschicht, an der sie offen sind, zur Stabilisierung des gesamten Produktes die erwähnte Zwischenschicht zwingend voraussetzen.

Aus der DE-PS 34 36 578 ist eine Vorrichtung zur Herstellung eines Eiskonfekts mit übereinanderliegenden Schichten bekannt, wobei die einzelnen Schichten aus ortsfest gehaltenen Extrusionsdüsen auf ein mit konstanter Geschwindigkeit bewegtes Förderband extrudiert werden, so daß mindestens eine Schicht wellenförmig ausgebildet ist. Die Extrusionsgeschwindigkeit der einen wellenförmigen Schicht liegt dabei über der Fördergeschwindigkeit des Förderbandes. Die Extrusionsdüsen können jeweils über eine Leitung mit einem Verteilerkopf verbunden sein.

Der Erfindung liegt die Aufgabe zugrunde, schichtweise zusammengesetzte gefrorene Konfektprodukte der beschriebenen Art weitrzuentwikkeln, um den lockeren, luftigen Eindruck beim Genuß der Produkte zu verstärken, die Produkte von der Notwendigkeit freizumachen, belüftete Eissorten, also sogenannte Softeissorten zu ihrem Aufbau zu verwenden und insbesondere Hohlräume zu schaffen, ohne stabilisierende Zwischenschichten vorsehen zu müssen.

Gemäß einer ersten Lösung dieser Aufgabe wird ein Formkörper nach dem Oberbegriff des Anspruches 1 vorgeschlagen, bei dem die Speiseeislagen aus extrudierten Strängen bestehen, die Stränge in Form von regelmäßigen oder unregelmäßigen Kreisbogen, die in der Ebene jeder Konfektschicht sich erstrecken, schleifenförmig abgelegt sind und die schleifenförmigen Kreisbogen der Stränge in der Konfektschicht so gelegt sind, daß sie sich überschneiden. Die Stränge können dabei im Grunde genommen beliebigen Querschnitt haben, vorzugsweise haben sie einen runden, ovalen, dreieckigen, rechteckigen oder sternförmigen Querschnitt. Durch die ornamentale Ablage der Stränge werden gleichzeitig Hohlräume geschaffen und durch die sich überschneidende Ablage der Stränge in benachbarten übereinander liegenden Konfektschichten ist eine stabile Anordnung der Schichten zueinander ohne stabilisierende Zwischenschicht gewährleistet.

Gemäß einer zweiten Lösung dieser Aufgabe bestehen die Speiseeislagen ebenfalls aus extrudierten Strängen, wobei die Stränge nach Art einer Acht oder auch in Form von Kreisen oder Ovalen, in der Ebene jeder Konfektschicht, so abelegt sind, daß sich die einzelnen Stränge benachbarter Konfektschichten überschneiden. Die sich innerhalb jeder Konfektschicht überlappenden Stränge sorgen für eine solche Stabilisierung jeder Schicht in sich selbst, daß die mehreren Schichten des Formkörpers übereinander abgelegt werden können, ohne daß sich die Stränge benachbarter Schichten überlappen müßten oder Zwischenschichten vorgesehen sein müssen.

Bei Einhalten der vorstehenden Bedingungen ist es ohne weiteres möglich, die extrudierten Speiseeisstränge dicker als 5 mm zu machen; beispielsweise Strangdurchmesser von 6 oder 8 mm zu wählen. Dadurch erhält das Produkt trotz der geschaffenen Hohlräume ein kompakteres Gesamtaussehen, ohne jedoch die eingangs erwähnten Vorzüge zu verlieren. Auch ist es möglich, die extrudierten Speiseeisstränge beliebig aus Milcheis, Wassereis oder auch aus Milcheissorten, die absichtlich durch Unterschlagen mit Luft angereichert worden sind, aufzubauen.

Zweckmäßige Ausgestaltungen der Erfindung sind in den Unteransprüchen 3 bis 8 gekennzeichnet. Alle diese Maßnahmen tragen dazu bei, ein deutlich verbessertes und weiterentwickeltes Endprodukt zu erzeugen, welches infolge des relativ hohen Gehaltes an Nicht-Eisstoffen Zunge und Magen besonders wenig belasten.

Zur Herstellung der vorgeschlagenen Förmkörper wird eine Vorrichtung angegeben, bei der eine Mehrzahl von Düsen nebeneinander und mit den Austrittsöffnungen nach unten auf einer beweglich gelagerten Halteplatte angeordnet ist. Die Einspeiseseite dieser Düsen ist jeweils über eine Leitung mit einem Verteilerkopf verbunden und die Halteplatte ist über ein Getriebe kurvenförmig bewegbar. Unterhalb der Düsen ist eine bewegliche Ablage für das Extrudat angeordnet.

Soll der Formkörper aus einem einzigen fortlaufend abgelegten Strang nach Anspruch 3 bestehen, so ist an der genannten Vorrichtung nur eine einzige Düse vorgesehen, welche gegebenenfalls zur Anpassung an die wachsende Höhe des Formstückes vertikal von der Ablage verstellbar ist.

Mit einer Vorrichtung dieser Art können die vorgeschlagenen Formkörper wirtschaftlich und schnell gefertigt werden. Den Düsen wird üblicherweise vorgefrorene Speiseeismasse bei einer Temperatur von beispielsweise -5 bis -IO°C zugeführt. Als Ablage kann ein geeignetes Tablett aus Pappe, Kunststoff, Gebäck oder dergleichen dienen. Die Düsen werden mit Hilfe des erwähnten Getriebes beispielsweise 8-förmig bewegt, so daß eine erste Lage Speiseeisextrudat auf die Unterlage abgelegt wird. Alsdann wird die Unterlage schrittweise fortbewegt und einer zweiten Düseneinrichtung zugeführt. Während die zweite Düseneinrichtung die zweite strangförmig ausgebildete Extrudatlage aufbringt, wird eine frische Ablageplatte unter die erste Düseneinrichtung geschoben und dort das Verfahren von vorne begonnen. Auf diese Weise läßt sich bei einer beliebig erweiterten Aufbaustraße je nach Wunsch ein mehrschichtiger, beispielsweise 6- oder 8-schichtiger Formkörper schnell und wirtschaftlich herstellen. Das fertig aufgebaute Produkt wird alsdann in einen Kühltunnel (Härtevorrichtung) eingeschoben und auf Lagertemperatur von etwa -2O oder -3O°C abgekühlt.

Bei einem abgewandelten Vorrichtungsaufbau kann so vorgegangen werden, daß ebenfalls eine Mehrzahl von Düsen nebeneinander auf einer beweglich gelagerten Halteplatte angeordnet ist. Auch diese Platte wird von einem geeigneten Getriebe, beispielsweise 8-förmig oder auch ovalförmig (ellipsenförmig) bewegt, wobei eine erste Lage eines strangförmigen Extrudates auf einer Unterlageplatte abgelegt wird. Nach Fertigstellung dieser Lage wird die Unterlageplatte nicht fortbewegt, sondern es beginnt mit denselben Düsen das Extrudieren einer zweiten Lage, die auf der ersten abgelegt wird. Die Einrichtung kann auch so gebaut sein, daß die Düsenplatte von Lage zu Lage angehoben wird, was ebenfalls durch das erwähnte Steuergetriebe bewerkstelligt werden kann.

Eine weitere Ausgestaltung der Vorrichtung insbesondere zur Herstellung von Formkörpern, bei denen die Fettschichten des Konfektproduktes aus mehreren Strängen, gegebenenfalls auch aus unterschiedlicher Konfektqualität, bestehen, und bei denen der Formkörper als endloser Formkörperstrang hergestellt ist und zu den gewünschten Formkörperstücken abgelängt ist, sind eine Mehrzahl von Düsen etwa in Höhe der zu bildenden Konfektschicht versetzt übereinander über einem als Ablage dienenden Transportband angeordnet, welches mit konstanter Geschwindigkeit bewegbar ist. Dabei sind die Düsen mittels eines Getriebes gesteuert horizontal über dem Transportband bewegbar, und es ist eine Schneidvorrichtung zum Ablängen der Formkörperstücke vorgesehen.

Die Erfindung wird nachfolgend anhand der beigefügten Zeichnungen näher erläutert. Es zeigen

Fig. I    eine perspektivische Ansicht einer Ausführungsform eines Speiseeis-Formkörpers;

Fig. 2    im Ausschnitt eine Draufsicht einiger Speiseeisstränge, die kurvenförmig nebeneinander abgelegt sind;

Fig. 3    eine andere Ausführungsform von als geschlossene Schleifen abgelegten Strangstücken;

Fig. 4    eine vereinfachte perspektivische Darstellung einer Vorrichtung zum Herstellen von SpeiseeisFormkörpern und

Fig 5    schematisch in Seitenansicht eine Vorrichtung zur Herstellung eines abzulängenden Formkörperstranges.

Der in Fig. I dargestellte Formkörper ist als Ganzes mit I bezeichnet. Er besteht aus extrudierten Speiseeissträngen 2, die kurvenförmig neben- und übereinander abgelegt sind. Es entstehen auf diese Weise Lagen-3;3',3'',die insgesamt den Formkörper bilden.

Der Formkörper als Ganzes und somit die untere Lage 3 ist auf einer Ablage 5 abgelegt, die aus Pappe, Kunststoff, Gebäck oder ähnlichem besteht.

Bei den in den Figuren l und 2 dargestellten Ausführungsbeispielen haben die Stränge 2 runden Querschnitt. Stattdessen können aber auch beliebige andere Querschnitte gewählt werden. Es werden runde, ovale, dreieckige, rechteckige oder sternförmige Querschnitte bevorzugt.

Als besonders günstig hat es sich erwiesen, wenn die Stränge 2 nach Art einer Acht abgelegt sind, wie dies in Fig. l dargestellt ist. Die Stränge überlagern sich in diesem Fall in der Mitte bei 6, so daß der Formkörper dort höher ist als an den Seiten. Bei praktischen Ausführungsformen werden die so erzeugten Hügelpunkte noch durch einen Tupfer aus andersfarbenem Eis oder auch aus Sahne oder dergleichen gekrönt.

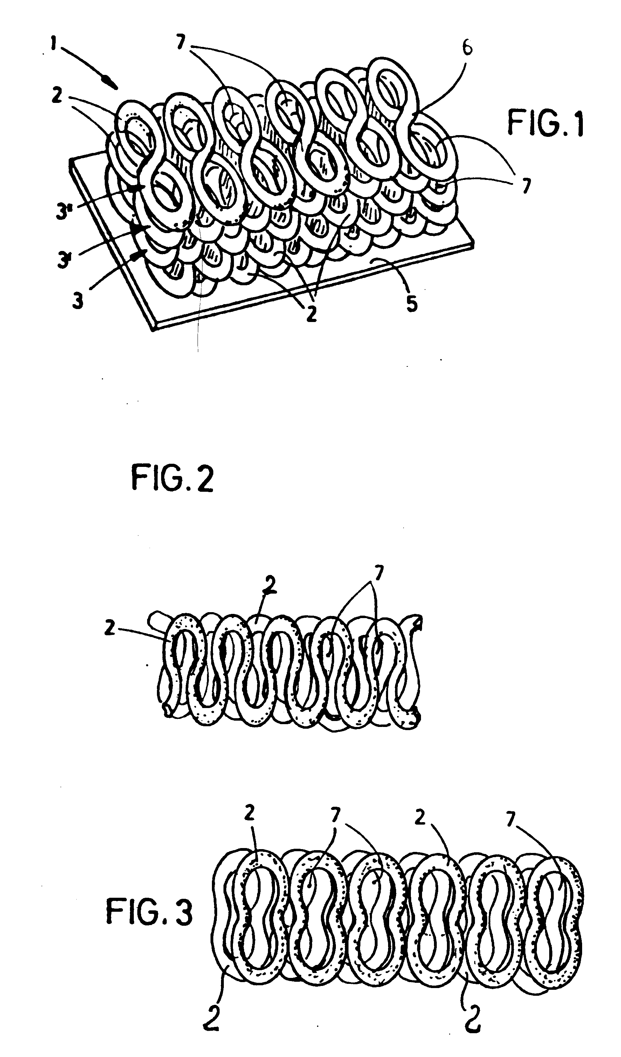

Die extrudierten Speiseeisstränge können auch in anderer Form als 8-förmig abgelegt werden, beispielsweise in Form von sich überschneidenden Kreisen oder Ovalen oder auch in den Formen, wie sie in den Figuren 2 und 3 gezeigt sind. In jedem Fall entsteht ein stark mit Hohlräumen durchsetztes Gebilde, welches locker und luftig ist und die bereits erwähnten Eigenschaften aufweist. Die Hohlräume 7 dieser Gebilde können zusätzlich mit Kuvertüre, Schokoladenmasse, Nougat, Nüssen, Mandeln, Früchten oder dergleichen gefüllt sein.

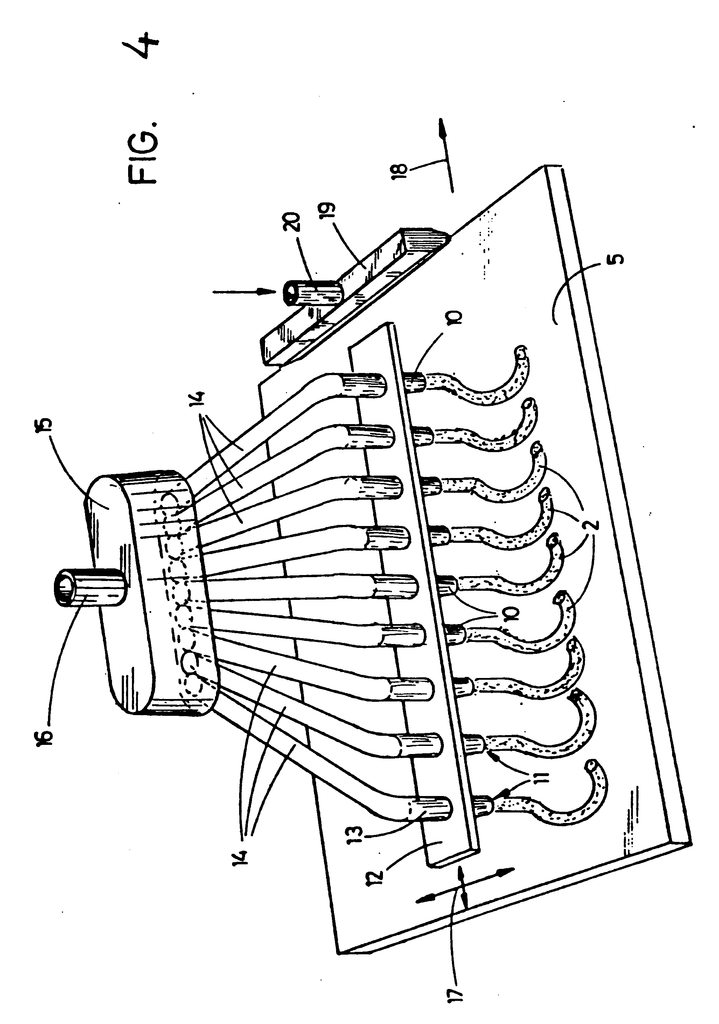

In Fig. 4 ist eine Vorrichtung zum Herstellen eines Speiseeisformkörpers dargestellt. Die Vorrichtung besteht aus einer Mehrzahl von Düsen lO, die nebeneinander und mit den Austrittsöffnungen ll nach unten auf einer beweglich gelagerten Halteplatte l2 angeordnet sind. Die Einspeiseseite l3 der Düsen lO ist jeweils über eine Leitung l4 (beispielsweise eine Schlauchleitung) mit einem Verteilerkopf l5 verbunden. Der Verteilerkopf l5 hat eine Hauptzuleitung l6, die ihrerseits unmittelbar zu einer unter Druck stehenden Speiseeislieferquelle, beispielsweise einem Extruder führt. Die Halteplatte l2 ist über ein Getriebe (nicht dargestellt) kurvenförmig bewegbar, wobei Richtung und Amplitude der Bewegung sich nach der Form der gewünschten Ablagekurve richtet. Die Bewegungen sind in Fig. 4 durch die Pfeile l7 angedeutet. Unterhalb der Düsen lO befindet sich die bewegliche Ablage 5, die bereits früher erwähnt worden ist.

Zum Betrieb der Vorrichtung wird der Hauptzuleitung l6 unter Druck stehendes Speiseeis zugeleitet. Dieses Eis wird über den Verteilerkopf l5 und die Leitungen l4 auf die Düsen lO verteilt. Infolge der Bewegung dieser Düsen werden die aus den Düsen austretenden Speiseeisstränge 2 kurvenförmig auf der Ablage 5 abgelegt, wie dies in Fig. 4 angedeutet ist.

Ist eine vollständige Figur, welche eine Lage bildet, abgelegt, so werden die Düsen geschlossen, so daß kein weiteres Speiseeis austreten kann. Die Ablage 5 wird alsdann in Richtung des Pfeiles l8 fortbewegt, wobei die abgelegten Figuren aus Speiseeissträngen unter der Breitschlitzdüse l9 vorbeibewegt werden. Dieser Düse wird über die Zuführleitung 2O Trennschicht-Masse, beispielsweise Schokoladenkuvertüre, Nougat oder dergleichen zugeführt und in dünner Schicht auf die abgelegten Figuren verteilt.

Sobald die Fortbewegung der Ablage 5 beendet ist, wird die Kuvertürenzuführung zur Breitschlitzdüse l9 abgestellt, und den Düsen lO (bzw. der gesamten dazugehörenden Vorrichtung) wird eine neue Ablage zur Wiederholung des geschilderten Arbeitstaktes zugeführt. Die bereits mit einer Stranglage versehene Ablage wird einer zweiten Vorrichtung zugeleitet, die der ersten entspricht und die die Aufgabe hat, eine zweite Stranglage aus Speiseeis aufzubringen. Die Anlage besteht auf diese Weise aus mehreren Strangpreßstationen, wobei acht Stationen erforderlich sind, sofern achtlägige Formkörper gebildet werden sollen. Am Ende der Vorrichtungs-Straße kann dann noch eine weitere Düseneinrichtung vorgesehen sein, die die Aufgabe hat, eine abschließende Kuvertüren-Krone oder Sahne-Krone auf die erzeugten Gebilde zu geben.

Wie bereits erwähnt, werden die in einer solchen Straße erzeugten Formkörper alsdann einem Härtetunnel (Tiefkühltunnel) zugeführt, wo sie schnell und schockartig auf Lagertemperaturen von etwa -3O° abgekühlt werden.

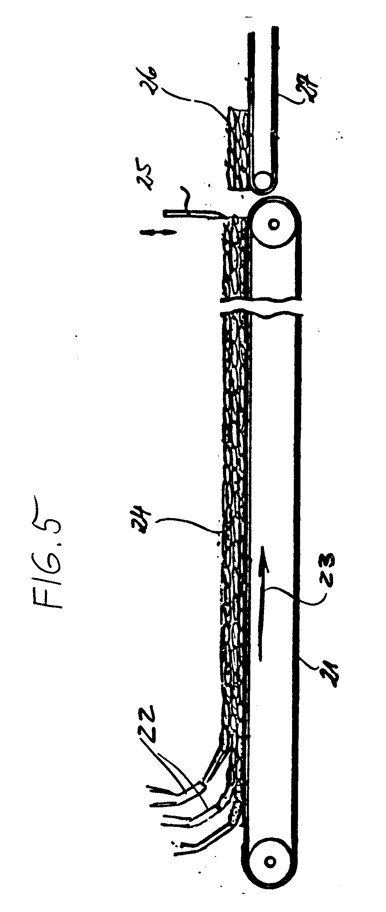

Bei der Vorrichtung nach Fig. 5 erfolgt die Ablage der Konfektschichten auf ein Förderband 2l, an dessen Anfang versetzt übereinander mehrere Düsen 22, hier beispielsweise drei Düsen, angeordnet sind, welche mit einer nicht dargestellten Zuführeinrichtung für Speiseeis verbunden sind und mittels eines ebenfalls nicht dargestellten Getriebes quer zur durch den Pfeil 23 angedeuteten Bewegungsrichtung des Förderbandes l gesteuert bewegbar sind. Der entstehende schematisch angedeutete Formkörperstrang 24 kann am Ende des Bandes 2l durch eine dort angeordnete und auf- und abbewegbare Schneideinrichtung 25 abgelängt werden, so daß Formkörperstücke 26 entstehen, welche durch ein weiteres Förderband 27 abgefördert werden können.

**Patentansprüche**

1.   Formkörper eines Konfektproduktes, bestehend aus mehreren, übereinander liegenden, aus extrudierten Strängen (2) gebildeten Konfektschichten (3), insbesondere aus Speiseeis, von denen mindestens eine wellenförmig und gegebenenfalls sich selbst überlappend verläuft, dadurch gekennzeichnet, daß die Stränge (2) einen runden, ovalen, dreieckigen, rechteckigen oder sternförmigen Querschnitt haben, die Stränge (2) in Form von regelmäßigen oder unregelmäßigen Kreisbogen, die in der Ebene jeder Konfektschicht (3) sich erstrecken, schleifenförmig abgelegt sind und die schleifenförmigen Kreisbogen der Stränge (2) der Konfektschicht (3) so gelegt sind, daß sie sich überschneiden.

2. Formkörper eines Konfektproduktes, bestehend aus mehreren, übereinander liegenden, aus extrudierten Strängen (2) gebildeten Konfektschichten (3), insbesondere aus Speiseeis, von denen mindestens eine wellenförmig und gegebenenfalls sich selbst überlappend verläuft,
dadurch gekennzeichnet, daß die Stränge (2) einen runden, ovalen, dreieckigen, rechteckigen oder sternförmigen Querschnitt haben und die Stränge (2) nach Art einer Acht oder auch in Form von Kreisen oder Ovalen, in der Ebene jeder Konfektschicht (3) so abgelegt sind, daß sich die einzelnen Stränge (2) benachbarter Konfektschichten überschneiden.

3. Formkörper nach Anspruch 1 oder 2, dadurch gekennzeichnet, daß die Konfektschichten (3) des genannten Konfektproduktes aus ein und demselben Strang (2) fortlaufend abgelegt gebildet sind.

4. Formkörper nach Anspruch 1 oder 2, dadurch gekennzeichnet, daß die Konfektschichten (3) des Konfektproduktes aus verschiedenen Strängen, gegebenenfalls auch aus unterschiedlicher Konfektqualität, bestehen.

5. Formkörper nach Anspruch 1 oder 2, dadurch gekennzeichnet, daß jede Konfektschicht (3) des Konfektproduktes aus mehreren, in der Ebene der Schicht (3) nebeneinander liegenden Strangstücken (2) gebildet ist.

6. Formkörper nach Anspruch 4, dadurch gekennzeichnet, daß der Formkörper als endloser Formkörperstrang hergestellt ist und zu dem gewünschten Formkörperstück abgelängt ist.

7. Formkörper nach einem der vorhergehenden Ansprüche, dadurch gekennzeichnet, daß die von den Strängen (2) bzw. Strangstücken gebildeten Hohlräume (7) mit Kuvertüren, Schokoladenstücken, Nüssen, Früchten oder dergleichen ganz oder teilweise gefüllt sind.

8. Formkörper nach einem der vorhergehenden Ansprüche, dadurch gekennzeichnet, daß parallel und anliegend zu jedem Strang (2) bzw. Strangstück ein Strang aus Konfektmaterial anderer Qualität, insbesondere auf Fettbasis, wie Kuvertüre, Kakao-Glasur, Nougat, angeordnet ist.

9. Vorrichtung zum Herstellen von Formkörpern nach einem der Ansprüche 1, 2 und 5,
dadurch gekennzeichnet, daß eine Mehrzahl von Düsen (10) nebeneinander und mit den Austrittsöffnungen (11) nach unten auf einer beweglich gelagerten Halteplatte (12) angeordnet ist, daß die Einspeiseseite (13) der Düsen (10) jeweils über eine Leitung (14) mit einem Verteilerkopf (15) verbunden ist, daß die Halteplatte (12) über ein Getriebe kurvenförmig bewegbar ist und daß unterhalb der Düsen (10) eine bewegliche Ablage (5) für das Extrudat angeordnet ist.

10. Vorrichtung nach Anspruch 9 zur Herstellung eines Formkörpers nach Anspruch 3,
dadurch gekennzeichnet, daß nur eine einzige Düse (10) für den fortlaufenden Strang (2) vorgesehen ist.

11. Vorrichtung zum Herstellen von Formkörpern nach einem der Ansprüche 1, 2, 4 und 6,
dadurch gekennzeichnet, daß eine Mehrzahl von Düsen (22) etwa in Höhe der zu bildenden Konfektschichten versetzt übereinander über einem als Ablage dienenden Transportband (21), welches mit konstanter Geschwindigkeit bewegbar ist, angeordnet ist und die Düsen mittels eines Getriebes gesteuert horizontal über dem Transportband (21) bewegbar sind und eine Schneidvorrichtung (25) zum Ablängen der Formkörperstücke vorgesehen ist.

## Claims

1. A shaped body of a confectionery product consisting of a plurality of superimposed confectionery layers (3) formed from extruded strands, in particular of ice cream, at least one of which is wave-shaped and may be self-overlapping, characterised in that the strands (2) have a round, oval, triangular, rectangular or star-shaped section, the strands (2) are laid down as loops in the form of regular or irregular arcs extending in the plane of each confectionery layer (3), and the looped arcs of the strands (2) of the confectionery layer (3) are laid down so as to intersect one another.

2. A shaped body of a confectionery product consisting of a plurality of superimposed confectionery layers formed from extruded strands (2), in particular of ice cream, at least one of which is wave-shaped and may be self-overlapping, characterised in that the strands (2) have a round, oval, triangular, rectangular or star-shaped section and the strands (2) are laid down in the form of a figure-of-eight or of circles or ovals that extend in the plane of each confectionery layer (3), so that the individual strands (2) of neighbouring confectionery layers intersect one another.

3. A shaped body according to claim 1 or claim 2, characterised in that the confectionery layers (3) of the said confectionery product are formed from one and the same strand (2) that is laid down continuously.

4. A shaped body according to claim 1 or claim 2, characterised in that the confectionery layers (3) of the confectionery product consist of different strands, which may be of different kinds of confectionery.

5. A shaped body according to claim 1 or claim 2, characterised in that each confectionery layer (3) of the confectionery product is made up of several strand pieces (2) lying alongside one another in the plane of the layer (3).

6. A shaped body according to claim 4, characterised in that the shaped body is prepared as an endless strand of shaped body and is cut up into shaped body pieces of desired length.

7. A shaped body according to any one of the preceding claims, characterised in that the spaces (7) formed by the strands (2) or pieces thereof are wholly or partly filled with couvertures, pieces of chocolate, nuts, fruit or the like.

8. A shaped body according to any one of the preceding claims, characterised in that a strand of confectionery material of a different kind, particularly a fat-based one, such as couverture, cocoa glaze or nougat, is arranged parallel to and adjacent to each of said strands (2) or strand pieces.

9. Apparatus for preparing shaped bodies according to any one of claims 1, 2 and 5, characterised in that a plurality of nozzles (10) are arranged side by side and with their outlet openings (11) downwards on a moveably mounted support plate (12), that the supply side (13) of the each of the nozzles (10) is connected via a supply line (14) with a distributor head (15), that the support plate (12) is moveable along a curved locus by a mechanism, and that a moveable substrate (5) for the extrudate is arranged below the nozzles (10).

10. Apparatus according to claim 9 for the preparation of a shaped body according to claim 3, characterised in that only a single nozzle (10) is provided for the continuous strand (2).

11. Apparatus for preparing shaped bodies according to any one of claims 1, 2, 4 and 6, characterised in that a plurality of nozzles (22) are arranged at substantially the height of the confectionery layers to be formed, and spaced vertically relative to one another, above a conveyor belt (21) that serves as substrate and can be moved at a constant speed, the nozzles being controlled by a mechanism to move horizontally above the conveyor belt (21), and a cutting device (25) is provided to cut the shaped body to length.

**Revendications**

1. Bloc de confiserie façonné, se composant de plusieurs couches (3) de confiserie superposées, constituées par des cordons (2) extrudés, en particulier en crême glacée, dont au moins un s'étend en forme d'ondulations en se chevauchant lui-même, le cas échéant, **caractérisé** en ce que les cordons (2) ont une section transversale ronde, ovale, triangulaire, rectangulaire ou en étoile, en ce que les cordons (2) sous la forme d'arcs de cercle réguliers ou irréguliers qui s'étendent dans le plan de chaque couche (3) de confiserie sont déposés sous la forme de boucles, et les arcs de cercle en forme de boucles des cordons (2) de la couche (3) de confiserie sont posés de telle sorte qu'ils s'entrecoupent.

2. Bloc de confiserie façonné, se composant de plusieurs couches (3) de confiserie superposées, constituées par des cordons (2) extrudés, en particulier en crême glacée, dont au moins un s'étend en forme d'ondulations en se chevauchant lui-même, le cas échéant, **caractérisé** en ce que les cordons (2) ont une section transversale ronde, ovale, triangulaire, rectangulaire ou en étoile et en ce que les cordons (2) sont déposés à la manière d'un huit, ou aussi sous la forme de cercles ou d'ovales, dans le plan de chaque couche (3) de confiserie, de telle manière que les cordons (2) individuels dans des couches voisines de confiserie s'entrecoupent.

3. Bloc façonné selon la revendication 1 ou 2, caractérisé en ce que les couches (3) de confiserie du produit de confiserie précité sont formées d'un seul et même cordon déposé de façon continue.

4. Bloc façonné selon la revendication 1 ou 2, caractérisé en ce que les couches (3) de confiserie du produit de confiserie sont constituées de cordons distincts, le cas échéant aussi de qualités différentes de confiseries.

5. Bloc façonné selon la revendication 1 ou 2, caractérisé en ce que chaque couche (3) de confiserie du produit de confiserie est constituée de plusieurs cordons (2) individuels reposant côte-à-côte dans le plan de la couche (3).

6. Bloc façonné selon la revendication 4, caractérisé en ce que le bloc façonné est fabriqué sous la forme d'un cordon sans fin du bloc façonné, et qu'il est coupé à longueur selon le morceau de bloc façonné voulu.

7. Bloc façonné selon une des revendications précédentes, caractérisé en ce que les cavités (7) formées par les cordons (2) et/ou les tronçons de cordons sont remplies totalement ou partiellement avec des couvertures, des morceaux de chocolat, des noisettes, des fruits, ou autres.

8. Bloc façonné selon une des revendications précédentes, caractérisé en ce que, parallèlement à chaque cordon (2) ou tronçon de cordon et au contact de celui-ci, est disposé un cordon d'un produit de confiserie d'une autre qualité, en particulier à base de matière grasse, telle qu'une couverture, un glaçage en cacao ou du nougat.

9. Dispositif pour la production de blocs façonnés selon une des revendications 1, 2 et 5, caractérisé en ce qu'une pluralité de buses (10) sont disposées côte à côte, et avec les ouvertures de sortie dirigées vers le bas, sur une plaque de support (12) montée de manière mobile; en ce que le côté d'alimentation (13) des buses est chaque fois relié à une tête de distribution (15); en ce que la plaque de support (12) est mobile selon un trajet courbe, au moyen d'un mécanisme d'entraînement; et en ce que sous les buses (10) est disposée une plaque mobile (5) pour recevoir le produit extrudé.

10. Dispositif selon la revendication 9 pour la production d'un bloc façonné selon la revendication 3, caractérisé en ce qu'il est prévu seulement une seule buse (10) pour le cordon (2) continu.

11. Dispositif pour la production de blocs façonnés selon une des revendications 1, 2, 4 et 6, caractérisé en ce qu'une pluralité de buses (22) sont disposées en étant décalées les unes au-dessus des autres, approximativement sur la hauteur des couches de confiserie à former, au-dessus d'une courroie transporteuse (21) servant de plaque réceptrice qui est mobile à vitesse constante, les buses étant mobiles horizontalement, en étant commandées par un mécanisme d'entraînement , au-dessus de la courroie transporteuse (21), un dispositif de coupe (25) étant prévu pour découper à la longueur voulue les morceaux du bloc façonné.

FIG.1

FIG.2

FIG.3

FIG. 4

FIG.5

EP 0 241 713 B1